# EUROPÄISCHE PATENTSCHRIFT

(11) **EP 2 689 991 B1**
(45) Veröffentlichungstag und Bekanntmachung des Hinweises auf die Patenterteilung: **14.09.2016**
(21) Anmeldenummer: 13177261.8
(22) Anmeldetag: 19.07.2013
(51) Int. Cl.: B62D 15/02

(54) **Vorrichtung und Verfahren zum Unterstützen eines Fahrers bei Parkvorgängen**
Device and method for assisting a driver when parking
Dispositif et procédé d'assistance au conducteur lors du parcage

(30) Priorität: 24.07.2012 DE 102012212900
(43) Veröffentlichungstag der Anmeldung: 29.01.2014
(73) Patentinhaber: ROBERT BOSCH GMBH, 70442 Stuttgart (DE)
(72) Erfinder: Niemz, Volker, 71277 Rutesheim (DE)

(56) Entgegenhaltungen:
- EP-A1- 2 295 281
- EP-A1- 2 597 016
- WO-A1-2011/155464
- WO-A1-2011/158713
- DE-A1-102006 026 092
- JP-A- 2006 256 382
- JP-A- 2008 174 192
- US-A1- 2007 198 190

## Beschreibung

### Stand der Technik

Die vorliegende Erfindung betrifft ein Verfahren sowie eine Vorrichtung zum Unterstützen eines Fahrers eines Fahrzeugs bei Parkvorgängen, insbesondere bei Parkvorgängen in urbanen Situationen.

Aus dem Stand der Technik sind autonome und semi-autonome Parksysteme bekannt, die einem Fahrer eines Fahrzeugs das Einparken erleichtern sollen. Diese Systeme beschränken sich meist auf das Parken in Längs- und Querparklücken. Jedoch sind in neuester Zeit vermehrt Systeme vorhanden, die vollständig autonom frontal einparken können. In urbanen Situationen tritt jedoch häufig das Problem auf, dass der Fahrer nicht weiß oder nicht entscheiden kann, welche Parklücke bei auftretender Mehrdeutigkeit selektiert wird. Jedoch ist es gerade bei autonomen Einparkvorgängen, bei denen sich der Fahrer außerhalb des Fahrzeugs befindet, als sicherheitskritisch anzusehen, wenn der Fahrer nicht weiß, wohin sich sein Fahrzeug bewegen wird.

Ein Verfahren und eine Vorrichtung gemäß den Oberbegriffen der nebengeordneten Ansprüche sind aus der WO 2011/158713 A1 bekannt.

### Offenbarung der Erfindung

Das erfindungsgemäße Verfahren zum Unterstützen eines Fahrers eines Fahrzeugs bei Parkvorgängen umfasst die nachfolgend erklärten Schritte. Zunächst werden Parklücken in der Umgebung eines Fahrzeugs durch eine Steuereinheit aufgefunden. Dabei hat der Fahrer des Fahrzeugs bevorzugt das Fahrzeug in die Nähe von einer entsprechenden Vielzahl an Parklücken gebracht. Bevorzugt findet keine vorherige Vermessung statt, so dass das Fahrzeug lediglich Parklücken auffinden kann, die innerhalb der Reichweite von bevorzugt mit der Steuereinheit verbundenen Sensoren liegen. In einem nächsten Schritt des erfindungsgemäßen Verfahrens wird durch die Steuereinheit eine Parklücke ausgewählt, woraufhin das Fahrzeug in einem weiteren Schritt in die ausgewählte Parklücke einparkt. Während des Einparkens versucht das Fahrzeug vorzugweise Referenzpunkte zu finden, wie beispielsweise die Parklücke begrenzende Hindernisse, an denen sich das Fahrzeug entlangtasten kann, um sicher in die Parklücke zu gelangen. Um Mehrdeutigkeiten zu verhindern, erfolgt außerdem der erfindungsgemäße Schritt des Erfassens einer Fahrervorgabe durch die Steuereinheit, wobei die Fahrervorgabe eine Seite des Fahrzeugs ist, in deren Richtung bevorzugt eingeparkt werden soll. Bevorzugt kann der Fahrer der Steuereinheit mitteilen, dass bevorzugt in Parklücken "links" oder "rechts" des Fahrzeugs eingeparkt werden soll. Somit kann der Fahrer das Verhalten der Steuereinheit beeinflussen, um das Fahrzeug zum Einparken in eine Parklücke seiner Wahl zu bringen.

Weiterhin betrifft die Erfindung eine Einparkvorrichtung für ein Fahrzeug, die eine Steuereinheit umfasst. Die Steuereinheit ist dabei eingerichtet, das Fahrzeug in eine Parklücke in der Umgebung des Fahrzeugs einzuparken. Dazu ist mit der Steuereinheit zumindest ein Umgebungssensor verbunden, über den die Steuereinheit Parklücken in der Umgebung des Fahrzeugs erkennen kann. Erfindungsgemäß ist mit der Steuereinheit ebenfalls eine Eingabevorrichtung verbunden, wobei die Eingabevorrichtung eingerichtet ist, ein Signal mit einer vom Benutzer gewählten Richtung an die Steuereinheit auszugeben. In diese Richtung soll das Fahrzeug bevorzugt einparken, so dass die Steuereinheit bevorzugt in dieser Richtung nach Parklücken sucht. Als Richtungsangabe wird auch hier wiederum bevorzugt "rechts" oder "links" des Fahrzeugs verwendet.

Die Unteransprüche zeigen bevorzugte Weiterbildungen der Erfindung.

In einer bevorzugten Ausführungsform der Erfindung wird das erfindungsgemäße Verfahren derart durchgeführt, dass die Seite, in deren Richtung bevorzugt eingeparkt werden soll, über einen Blinkerhebel des Fahrzeugs auswählbar ist. Insbesondere befindet sich der Fahrer dabei innerhalb des Fahrzeugs und betätigt den Blinkerhebel. Dies hat den Vorteil, dass keine zusätzlichen Geräte im Fahrzeug verbaut werden müssen, über die der Fahrer der Steuereinheit die Seite vorgeben kann. Außerdem ist die Bedienung des Blinkerhebels für den Fahrer eine gewohnte Tätigkeit, so dass hier keine zusätzliche Belastung für den Fahrer entsteht. Ebenso ist die Verwendung des Blinkerhebels intuitiv, da ein Betätigen des Blinkerhebels nach links bedeutet, dass das Fahrzeug bevorzugt nach links einparken soll. Analog gilt für ein Betätigen des Blinkerhebels nach rechts, dass das Fahrzeug bevorzugt nach rechts einparken soll.

Alternativ wird das erfindungsgemäße Verfahren bevorzugt durchgeführt, indem sich eine Person, insbesondere der Fahrer, außerhalb des Fahrzeugs befindet und die Seite über eine Position der Person relativ zum Fahrzeug auswählbar ist. Bei dieser Alternative bestimmt das Fahrzeug eine relative Position der Person und sucht bevorzugt Parklücken in der Richtung, in der sich die Person aufhält. Dies stellt eine sehr komfortable Lösung beispielsweise für den Fahrer dar, da sich dieser nicht mit dem Einparkvorgang selbst beschäftigen muss. Er kann somit lediglich eine geeignete Parklücke auswählen, und sich in die Nähe dieser Parklücke stellen, wobei das Fahrzeug den Einparkvorgang beispielsweise autonom übernimmt.

Das erfindungsgemäße Verfahren wird durchgeführt, indem die Seite über eine Fernbedienung auswählbar ist. Auch dies ermöglicht es, auf eine einfache und intuitive Weise, eine Wahl der Richtung zu treffen, in die das Fahrzeug bevorzugt einparken soll.

Weiterhin ist es vorteilhaft, wenn das Fahrzeug den Parkvorgang autonom übernimmt. Somit muss sich der Fahrer lediglich auf die Auswahl der Parklücke konzentrieren.

Erfindungsgemäß ist vorgesehen, dass, insbesondere durch den Fahrer des Fahrzeugs, während des Einparkvorgangs eine Seite vorgebbar ist, wodurch die Steuereinheit eine neue Parklücke auswählt und das Einparken in die neue Parklücke fortsetzt. Es ist dem Fahrer somit möglich, die Wahl der Parklücke bis zum finalen Stillstand des Fahrzeugs weiter zu verfeinern. Sollten sich beispielsweise zwei Parklücken unmittelbar nebeneinander befinden, so kann beispielsweise der Fahrer dem Fahrzeug zunächst vorgeben, in Richtung der beiden Parklücken einzuparken und bei einem fortschreitenden Einparkvorgang die Auswahl auf eine bestimmte Parklücke der beiden Parklücken festlegen. Es besteht somit größtmögliche Flexibilität und ein größtmöglicher Handlungsspielraum für den Fahrer.

Die erfindungsgemäße Einparkvorrichtung weist als Eingabevorrichtung eine Fernbedienung oder ein Bedienelement des Fahrzeugs auf. In beiden Fällen ist keine zusätzliche Hardware vorhanden bzw. notwendig, um die Eingabevorrichtung zu realisieren. Dies wiederum wirkt sich positiv auf die Kosten und somit auch auf die Akzeptanz der erfindungsgemäßen Einparkvorrichtung aus. Weiterhin kann der Fahrer des Fahrzeugs intuitiv bereits vorhandene Elemente des Fahrzeugs bedienen und muss sich nicht mit neuen Elementen vertraut machen.

In einer vorteilhaften Ausführungsform der Erfindung weist die Einparkvorrichtung zumindest eine mit der Positionseinheit verbundene Kamera auf, wobei die Positionseinheit eingerichtet ist, über die Kamera eine Position des Fahrers außerhalb des Fahrzeugs zu bestimmen. Weiterhin kann die Positionseinheit aus der Position des Fahrers des Fahrzeugs eine Seite des Fahrzeugs bestimmen, auf der sich der Fahrer befindet. Diese Seite kann schließlich als Richtung an die Steuereinheit ausgegeben werden, in die das Fahrzeug bevorzugt eingeparkt werden soll. Bevorzugt handelt es sich bei der Kamera um ein Gerät, das bereits im Fahrzeug verbaut ist, um anderen Fahrerassistenzsystemen, wie beispielsweise einer Verkehrszeichenerkennung oder einem Spurhalteassistenten, Daten zu liefern. In diesem Falle würde keine zusätzliche Hardware benötigt werden. Insgesamt hat die Verwendung der Kamera den Vorteil, dass sich der Fahrer außerhalb des Fahrzeugs aufhalten kann, während die Einparkvorrichtung das Fahrzeug einparkt, so dass sich der Fahrer gänzlich auf die Parklückenauswahl konzentrieren kann.

In einer bevorzugten Ausführungsform der Erfindung ist die Steuervorrichtung der erfindungsgemäßen Einparkvorrichtung eingerichtet, das Fahrzeug autonom in eine Parklücke einzuparken. Dies ist eine sehr komfortable Lösung für den Fahrer des Fahrzeugs, der sich nicht mit dem Einparkvorgang selbst beschäftigen muss. Somit kann sich der Fahrer beispielsweise auf eine Kontrolle des autonomen Einparkvorgangs konzentrieren, wodurch die Gefahr von Kollisionen durch das Zusammenspiel der Einparkvorrichtung und des Fahrers deutlich vermindert wird. Weiterhin stellt die Einparkvorrichtung sicher, dass auch bei schwierigen Einparksituationen schnell und sicher in eine Parklücke eingeparkt werden kann.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine schematische Darstellung der Einparkvorrichtung gemäß eines bevorzugten Ausführungsbeispiels der Erfindung,
- Figur 2: eine schematische Darstellung einer typischen Einparksituation in der Mehrdeutigkeit auftreten kann, und
- Figur 3: eine schematische Darstellung einer weiteren Einparksituation in der Mehrdeutigkeit auftreten kann.

### Ausführungsformen der Erfindung

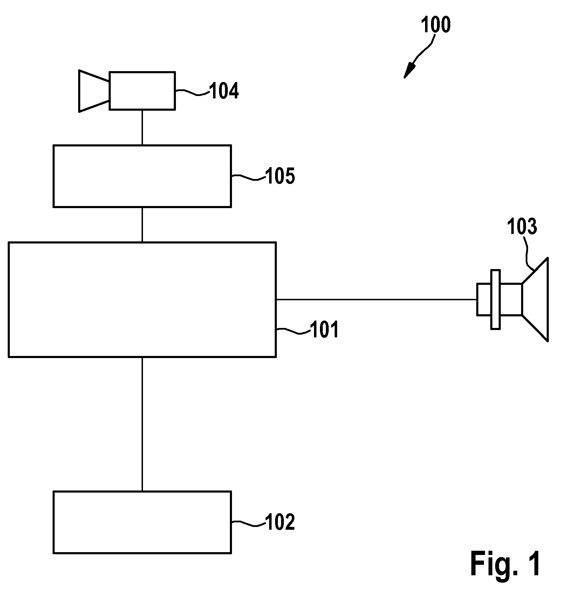

Figur 1 zeigt einen schematischen Aufbau der erfindungsgemäßen Einparkvorrichtung 100. Die Einparkvorrichtung 100 umfasst eine Steuervorrichtung 101, die mit einer Eingabevorrichtung 102, einer Positionseinheit 105 und einem Umfeldsensor 103 verbunden ist. Die Eingabevorrichtung 102 kann beispielsweise der Blinkerhebel eines Fahrzeugs, die Fernbedienung eines Fahrzeugs oder ein sonstiges Bedienelement des Fahrzeugs sein. Bei dem Umfeldsensor kann es sich beispielsweise um einen Radarsensor, einen Ultraschallsensor oder um eine Kamera handeln. Die Positionseinheit 105 dient zum Ermitteln einer Position des Fahrers des Fahrzeugs, wenn sich dieser außerhalb des Fahrzeugs befindet. Dazu ist die Positionseinheit 105 mit einer Kamera 104 verbunden, wobei die Kamera 104 ein Umfeld des Fahrzeugs überwacht. Es ist dabei beispielsweise auch möglich, dass der Umfeldsensor 103 durch die Kamera 104 realisiert wird. Sollte die Kamera 104 den Fahrer des Fahrzeugs erfassen, so berechnet die Positionseinheit 105 eine relative Position des Fahrers zu dem Fahrzeug, um daraus eine Richtung zu bestimmen, in die das Fahrzeug bevorzugt eingeparkt werden soll.

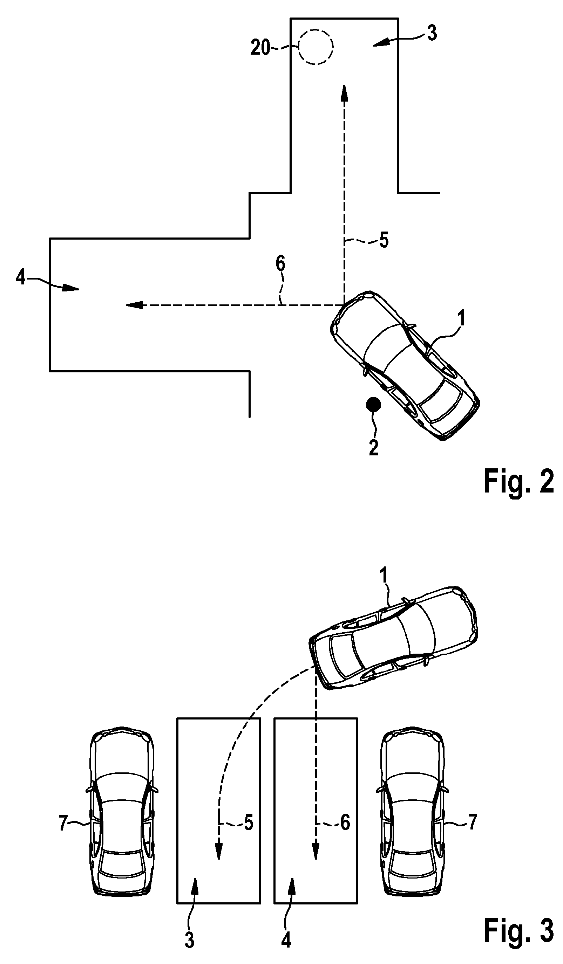

Figur 2 zeigt ein Fahrzeug 1, das sich in einer typischen Einparksituation befindet, in der zwei Möglichkeiten des Parkens vorhanden sind. Zum einen befindet sich eine erste Parklücke 3, zum anderen eine zweite Parklücke 4 in einem Bereich vor dem Fahrzeug 1, so dass sich beide Parklücken 3 und 4 ideal zum Einparken eignen. Ein außerhalb des Fahrzeugs 1 stehender Fahrer 2 kann daher nicht vorhersagen, ob das Fahrzeug einem ersten Fahrweg 5, um in die erste Parklücke 3 einzuparken, oder einem zweiten Fahrweg 6 folgen wird, um in die zweite Parklücke 4 einzuparken. Dies kann jedoch zu gefährlichen Situationen führen, wenn der Fahrer 2 erwartet, dass das Fahrzeug 1 dem ersten Fahrweg 5 folgt und in die erste Parklücke 3 einparkt. Sollte das Fahrzeug 1 nun dem zweiten Fahrweg 6 folgen, um in die zweite Parklücke 4 einzuparken, so kann diese unerwartete Bewegung den Fahrer 2 erschrecken, wobei der Fahrer 2 von einer Flanke des Fahrzeugs 1 getroffen werden kann.

Um diese Gefahr zu vermeiden, kann der Fahrer 2 des mit der erfindungsgemäßen Einparkvorrichtung ausgestatteten Fahrzeugs 1, insbesondere vor dem Verlassen des Fahrzeugs 1, einen Blinkerhebel des Fahrzeugs 1 auf rechts stellen, damit das Fahrzeug 1 dem ersten Fahrweg 5 folgt und in die erste Parklücke 3 einparkt. Alternativ kann sich auch der Fahrer 2 an eine Position 20 stellen, die dann vom Fahrzeug 1 erkannt und entsprechend interpretiert wird, so dass auch in diesem Fall das Fahrzeug den ersten Fahrweg 5 nimmt und in die erste Parklücke 3 einparkt.

Figur 3 zeigt eine weitere Situation, in der Mehrdeutigkeiten auftreten können. Wiederum kann ein Fahrzeug 1 in eine erste Parklücke 3 oder in eine zweite Parklücke 4 einparken. Um in die erste Parklücke 3 einzuparken, muss das Fahrzeug einem ersten Fahrweg 5 folgen. Um in die zweite Parklücke 4 einzuparken, muss das Fahrzeug einem zweiten Fahrweg 6 folgen. Die Parklücken 3 und 4 werden dabei jeweils von einem Hindernis 7 begrenzt. Als Beispiel wird angenommen, dass das Fahrzeug 1 autonom in die erste Parklücke 3 eingeparkt wird, also dem ersten Fahrweg 5 folgt. Falls der Fahrer 2 des Fahrzeugs 1 mit dieser Wahl jedoch nicht zufrieden ist, so kann er den Blinkerhebel des Fahrzeugs 1 nach rechts bewegen, um somit der Einparkvorrichtung 100 mitzuteilen, dass er ein Einparken in die zweite Parklücke 4 wünscht. In diesem Fall berechnet die Einparkvorrichtung 100 die Einparktrajektorie neu, so dass das Fahrzeug 1 nun dem zweiten Fahrweg 6 folgt, um in die zweite Parklücke 4 einzuparken.

## Patentansprüche

1. Verfahren zum Unterstützen eines Fahrers (2) eines Fahrzeugs (1) bei Parkvorgängen, umfassend die Schritte:
- Auffinden von Parklücken (3, 4) in einer Umgebung des Fahrzeugs (1) durch eine Steuereinheit (101),
- Auswählen einer Parklücke (3; 4) in der Umgebung durch die Steuereinheit (101),
- Einparken des Fahrzeugs (1) in die Parklücke (3; 4), und
- Erfassen einer Fahrervorgabe durch die Steuereinheit (101),
- wobei die Fahrervorgabe eine Seite des Fahrzeugs (1) ist, in deren Richtung bevorzugt eingeparkt werden soll,
**dadurch gekennzeichnet, dass**
- die Seite über eine Fernbedienung auswählbar ist, und
- während des Einparkens eine Seite vorgebbar ist, wodurch die Steuereinheit eine neue Parklücke (3; 4) auswählt und das Einparken in die neue Parklücke (3; 4) fortsetzt.

2. Verfahren nach Anspruch 1, wobei der Einparkvorgang autonom abläuft.

3. Einparkvorrichtung (100) für ein Fahrzeug, umfassend:
- eine Steuereinheit (101), die eingerichtet ist, das Fahrzeug (1) in eine Parklücke (3, 4) in der Umgebung einzuparken,
- zumindest einen mit der Steuereinheit (101) verbundenen Umgebungssensor (103) zum Erkennen von Parklücken (3, 4) in der Umgebung, und
- zumindest eine mit der Steuereinheit (101) verbundene Eingabevorrichtung (102) zum Auswählen einer Seite des Fahrzeugs (1), in deren Richtung die Steuereinheit (101) das Fahrzeug (1) bevorzugt einparken soll, wobei die Eingabevorrichtung (102) eingerichtet ist, ein Signal mit der gewählten Richtung an die Steuereinheit (101) auszugeben,
**dadurch gekennzeichnet, dass**
- die Eingabevorrichtung (102) eine Fernbedienung des Fahrzeugs (1) ist, und
- während des Einparkens eine Seite vorgebbar ist, wodurch die Steuereinheit eine neue Parklücke (3; 4) auswählt und das Einparken in die neue Parklücke (3; 4) fortsetzt.

4. Einparkvorrichtung nach Anspruch 3, wobei die Steuervorrichtung (101) eingerichtet ist, das Fahrzeug (1) autonom in eine Parklücke (3; 4) einzuparken.

## Claims

1. Method for assisting a driver (2) of a vehicle (1) in parking manoeuvres, comprising the steps of:
- a control unit (101) finding parking spaces (3, 4) in surroundings of the vehicle (1),
- the control unit (101) selecting a parking space (3; 4) in the surroundings,
- the vehicle (1) being parked in the parking space (3; 4), and
- the control unit (101) registering a driver stipulation,
- wherein the driver stipulation is a side of the vehicle (1) whose direction is the preference for parking,
**characterized in that**
- the side is selectable by means of a remote control, and
- during parking, one side is stipulatable, as a result of which the control unit selects a new parking space (3; 4) and continues parking in the new parking space (3; 4).

2. Method according to Claim 1, wherein the parking manoeuvre proceeds autonomously.

3. Parking apparatus (100) for a vehicle, comprising:
- a control unit (101) that is set up to park the vehicle (1) in a parking space (3, 4) in the surroundings,
- at least one ambient sensor (103), connected to the control unit (101), for identifying parking spaces (3, 4) in the surroundings, and
- at least one input apparatus (102), connected to the control unit (101), for selecting a side of the vehicle (1) whose direction is the preference for the control unit (101) to park the vehicle (1), wherein the input apparatus (102) is set up to output a signal with the selected direction to the control unit (101),
**characterized in that**
- the input apparatus (102) is a remote control of the vehicle (1), and
- during parking, one side is stipulatable, as a result of which the control unit selects a new parking space (3; 4) and continues parking in the new parking space (3; 4).

4. Parking apparatus according to Claim 3, wherein the control apparatus (101) is set up to park the vehicle (1) in a parking space (3; 4) autonomously.

## Revendications

1. Procédé d'assistance d'un conducteur (2) d'un véhicule (1) lors des manoeuvres de stationnement, comprenant les étapes suivantes :
- recherche d'emplacements de stationnement (3 ; 4) dans un environnement du véhicule (1) par une unité de commande (101),
- sélection d'un emplacement de stationnement (3 ; 4) dans l'environnement par l'unité de commande (101),
- mise en stationnement du véhicule (1) dans l'emplacement de stationnement (3 ; 4) et
- détection d'une indication du conducteur par l'unité de commande (101),
- l'indication du conducteur étant un côté du véhicule (1) dans la direction duquel la mise en stationnement doit être réalisée de préférence,
**caractérisé en ce que**
- le côté peut être sélectionné par le biais d'une commande à distance et
- un côté peut être prédéfini pendant la mise en stationnement, ce par quoi l'unité de commande sélectionne un nouvel emplacement de stationnement (3 ; 4) et poursuit la mise en stationnement dans le nouvel emplacement de stationnement (3 ; 4).

2. Procédé selon la revendication 1, selon lequel la manoeuvre de mise en stationnement se déroule de manière autonome.

3. Dispositif de mise en stationnement (100) pour un véhicule, comprenant :
- une unité de commande (101) qui est conçue pour mettre en stationnement le véhicule (1) dans un emplacement de stationnement (3 ; 4) dans l'environnement,
- au moins un capteur d'environnement (103) relié à l'unité de commande (101) et servant à la reconnaissance d'emplacements de stationnement (3, 4) dans l'environnement et
- au moins un dispositif de saisie (102) relié à l'unité de commande (101) et servant à sélectionner un côté du véhicule (1) dans la direction duquel l'unité de commande (101) doit de préférence mettre en stationnement le véhicule (1), le dispositif de saisie (102) étant conçu pour délivrer à l'unité de commande (101) un signal avec la direction sélectionnée,
**caractérisé en ce que**
- le dispositif de saisie (102) est une commande à distance du véhicule (1) et
- un côté peut être prédéfini pendant la mise en stationnement, ce par quoi l'unité de commande sélectionne un nouvel emplacement de stationnement (3 ; 4) et poursuit la mise en stationnement dans le nouvel emplacement de stationnement (3 ; 4).

4. Dispositif de mise en stationnement selon la revendication 3, avec lequel l'unité de commande (101) est conçue pour une mise en stationnement autonome du véhicule (1) dans un emplacement de stationnement (3 ; 4).
